# EUROPEAN PATENT SPECIFICATION

(11) **EP 3 372 354 B1**
(45) Date of publication and mention of the grant of the patent: **07.06.2023**
(21) Application number: 17160121.4
(22) Date of filing: 09.03.2017
(51) Int. Cl.: B25J 9/08, B25J 9/12, B25J 9/16, B25J 13/08, B25J 19/00

(54) **MODULAR ROBOTIC JOINT AND RECONFIGURABLE ROBOT MADE USING THE SAME**
MODULARE ROBOTERVORRICHTUNGSVERBINDUNG UND DAMIT HERGESTELLTER REKONFIGURIERBARER ROBOTER
ARTICULATION DE ROBOT MODULAIRE ET ROBOT RECONFIGURABLE FABRIQUÉ EN L'UTILISANT

(43) Date of publication of application: 12.09.2018
(73) Proprietor: SUPSI, Manno 6928 (CH)
(72) Inventor: VALENTE, Anna, 6917 Barbengo (CH); BRUGNETTI, Ivan, 6983 Magliaso (CH); COLLA, Marco, 6600 Muralto (CH)
(74) Representative: Modiano, Gabriella Diana

(56) References cited:
- EP-A1- 2 700 481
- EP-A2- 1 287 869
- CN-U- 205 889 243
- US-A- 4 990 839
- US-A- 5 155 423
- US-A- 6 084 373

## Description

The present invention relates to a reconfigurable modular robotic joint usable as an active, self-contained module in a reconfigurable modular robot.

The application of reconfigurable robotics in the industrial manufacturing field poses critical questions in relation to the need for accomplishing demanding precision, robustness, reliability and accuracy requirements associated to machining and assembly processes.

The advantage for having reconfigurable robots in the shop-floor would be an extreme flexibility and agility towards changes of the family of products to be manufactured, the demand volume and any possible adaptation of the production scheduling along with an effective reactiveness towards anomalous and faulty behavior of the physical resource operating in the manufacturing environment.

In this scenario, robotic modules should embed the flexibility to be nested in multiple position of the modular robot that is configurable, for example, as a robotic arm.

As a result, modular robots have to be designed to accomplish a wide range of possible robot configurations, degrees of freedom and working performances.

The design process of modules for reconfigurable industrial robots must in fact embrace all the requirements typically addressed to the manufacturing industry plus the ones characterizing the service robotic field.

Modular robots are therefore generally conceived as the composition of multiple blocks with uniform interfaces allowing for the transfer of mechanical forces and torque, electrical power, and communication through the robot.

Such building blocks, called simply blocks, consist usually of primary structural actuated modules, the joints, and of passive modules, the links.

Other additional specialized units such as grippers and vision systems are used according to the specific requirement for use.

As an active module, the joint has a motor to produce the motion then providing Degree of Freedoms (DoFs), while the passive module, the link, mechanically connects the joints in a configuration with a parallel or serial structure.

The joint and the link modules are to be nested to form composite structures with enhanced performance.

Stoy et al. (K. Stoy, D. Brandt, D.J. Christensen, Self-reconfigurable Robots, An introduction; The MIT Press, 2010) provide a comprehensive overview of the latest solutions and approaches related to self-reconfigurable robots while addressing the mechanical, control, configuration and functional monitoring challenges. A further example is disclosed in CN-205889243U.

When benchmarking the available solutions for modular robots with the aforementioned requirements, a need for improvements is felt, especially with regard to the robustness and simple coupling capacity of connection interfaces and to the nesting precision of modules automatically connecting one to each other.

Known solutions of modular joints are generally for large and heavy joints with not satisfactory motion accuracy.

Known interface design constrains often the modules to take specific position in the robotic chain which severely limits the interchangeability of the module itself across the single robotic arm and among the robotic arms.

Therefore, there is still a need in the field for a new joint design that improves the existing active modular joints so as to make them easily and efficiently adaptable to reconfigure a robot so as to be usable in most if not all of the operations required in the manufacturing field.

More particularly, there is a need for a modular joint with a design enabling every and each one of the modules to change the position in the robotic chain of a robot arm, while severely limiting the backlashes and the torsions.

An object of the invention is therefore to provide a modular joint for a reconfigurable robot and a reconfigurable robot using the same, where the joint has a connection interface which enhances the module versatility and flexibility while allowing a precise assembly for reconfiguring the robot for high precision manufacturing applications.

It is a further object to provide a modular joint that has itself, and provide to the reconfigurable robot in any of its possible configurations, high accuracy in operation.

It is yet another object to provide a modular joint with an interface suitable for operating in different positions across the robotic chain and for being fitted to different manipulators, with cutting edge lightweight and compactness, embedded and distributed control system having the autonomy to discover and interpret the new modules, and intelligence to fulfil the working requirements.

It is still another object of the present invention to provide a modular joint, usable in a reconfigurable robot, that can be made by using devices available on the market so as to limit the costs for its fabrication.

The foregoing needs in the art and the foregoing objects are achieved by a modular robotic joint usable as an active, drive module in a reconfigurable modular robot that has the features set forth in claim 1 and by a reconfigurable modular robot using the modular robotic joints of claim 1 that has the features set forth in claim 7.

The modular joint according to the invention has high accuracy in operation that results from the synergy of a most accurate mechanical design and an embedded monitoring and controlling system.

In one version, the modular joint according to the invention mounts a torque motor, and to compensate for the limited variety of motor size and torque a gearbox is adopted to provide high performance and compactness.

The torque motor is fitted with a special designed hollow shaft in a way that all the wires and feed connections can be located in the central part of the motor to save on space and complexity.

Use of traditional AC, DC or BLDC motors is envisaged in the present invention also, in alternative to the torque motor, which are not shown in detail in the enclosed Figures. In such alternative, traditional motor solution, the design adopted for the location of the feed connections and wires powering the joint and the other joints in the robotic chain, provides a not rotating peripheral shell that accommodates all such feeds and cables.

According to an aspect of the invention, the connection interface of the modular joints for the reconfiguration of the modular robot is constituted by a uniform interface of the type of that of the blocks making up the modular robot. The connection interface of the joint can provide itself the uniform interface of the block.

Such uniform interfaces are practically provided as standard interfaces for easy and efficient plugging into, or unplugging from uniform interfaces of the block for operation in any of the different positions required by the configuration/reconfiguration of the modular robot.

According to the invention, the kinematic chain configuration of the modular robot may be that of a anthropomorphic robotic arm that comprises a first base section, subjected to increased torques, and a second arm section subjected to lower torques.

The first base section may comprise modular joints having a stronger structure and more powerful drives. The second section may instead comprise modular joints that have a lighter structure which is suitable to enable the arm to achieve requested dynamic performance, such as high translation/rotation speeds with little inertial forces.

Another aspect of the invention is that the modular joints are provided individually and so as to provide an independent unity, with its own control system including sensing devices for sensing position and speed of the drive, digital encoder 5 and integrated driver devices 3, enabling sharing of command and control signals among a plurality of joints and a computer control PC via communication interface.

The control device embedded in each of the joints communicates with the control devices of the others and with the computer control, so as to enable automatic discovery and interpretation of any new modular joint when plugged into the modular robot by way of the integrated driver modules, sharing features of the new modular joint with a PLC module of the computer control, which generates a new set of parameters for the new modular robot configuration.

### BRIEF DESCRIPTION OF THE DRAWINGS

The modular joint and reconfigurable modular robot assembled by using the modular joints forming the present invention will now be described, by way of example only, in the accompanying drawings, in which:
FIG. 1 is a perspective view of a section of a reconfigurable robot arm using modular joints in accordance with the present invention;
FIG. 2 is a perspective exploded view of the reconfigurable robot arm section using modular joints of Fig. 1;
FIG. 3 is a side view of a modular joint for a reconfigurable robot arm in accordance with the present invention;
FIG. 4 is a front view of the modular joint for a reconfigurable robot arm of Fig. 3;
FIG. 5 is a cross sectional longitudinal view of the modular joint for a reconfigurable robot arm of Fig. 3;
FIG. 6 is a cross sectional longitudinal view of a variant of the modular joint that can be used in the end section of a reconfigurable robot arm according to the invention.
FIGs. 7a-7b illustrate a possible configuration and related connection schema of a reconfigurable robot arm according to the invention;
FIG. 8 illustrates an exemplary schema of wire and feed routing in the routing hole of the modular joint according to the present invention.

### DETAILED DESCRIPTION OF THE INVENTION

A preferable but not exclusive embodiment of a modular joint, according to the present invention, that can be used as an actuation unit in a reconfigurable modular robot, arranged at any necessary location thereof and in any operation position, is hereinafter disclosed with reference to the Figures.

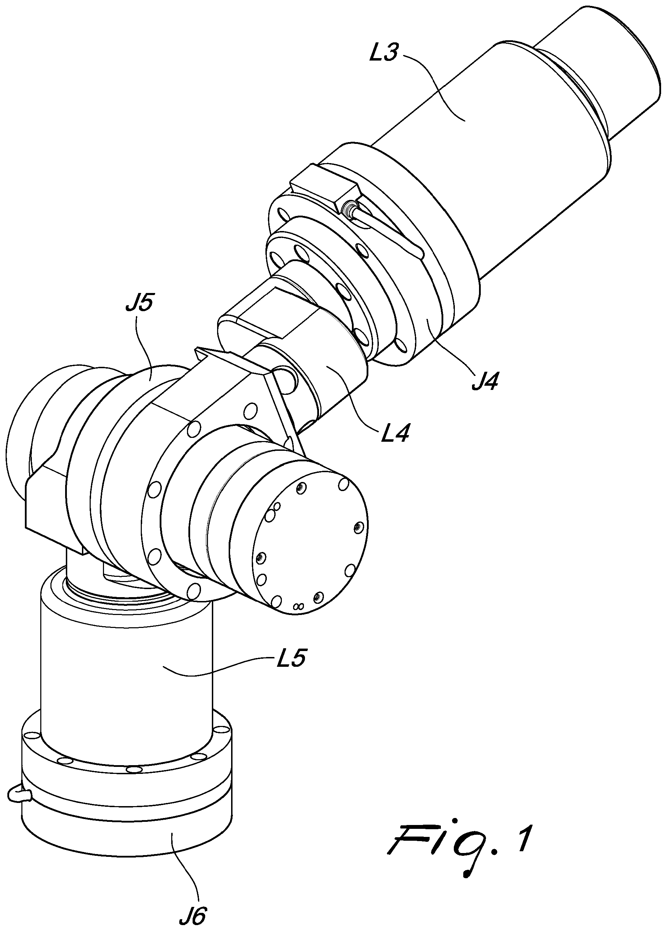

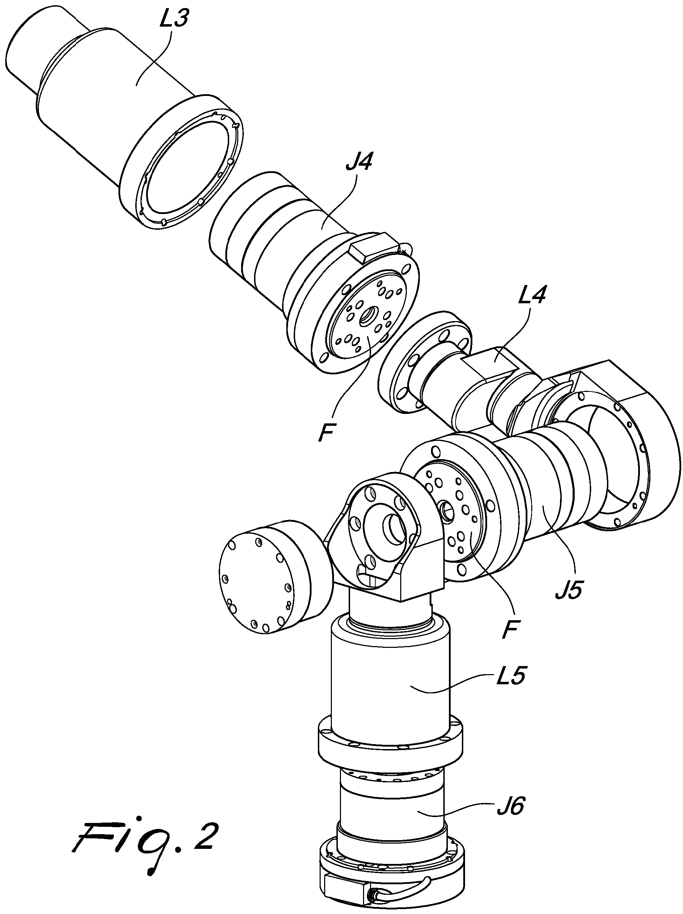

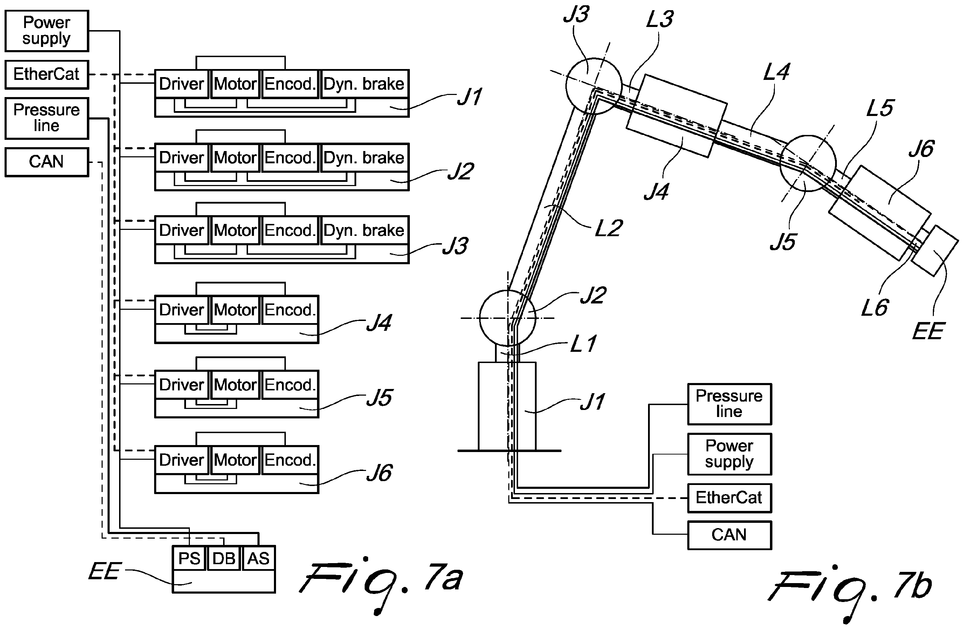

With reference to Figures 1, 2 and 7, the modular robot is configured with a plurality of blocks comprising at least one modular joint indicated as J1-J6 and at least one modular link member indicated as L1-L6. Each block has uniform interfaces that allow transfer of mechanical forces and torque, electrical power, and communications therethrough.

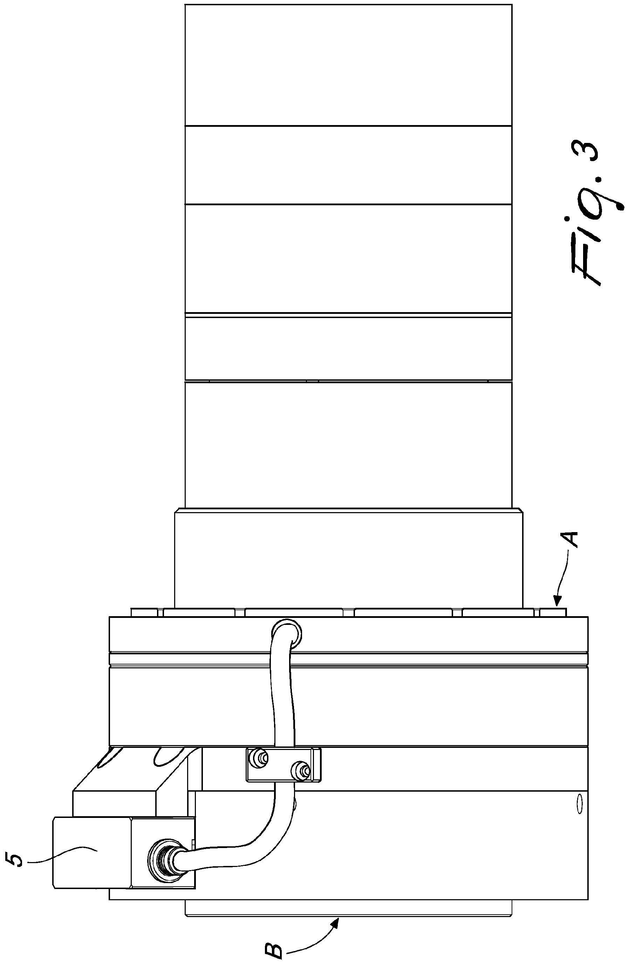

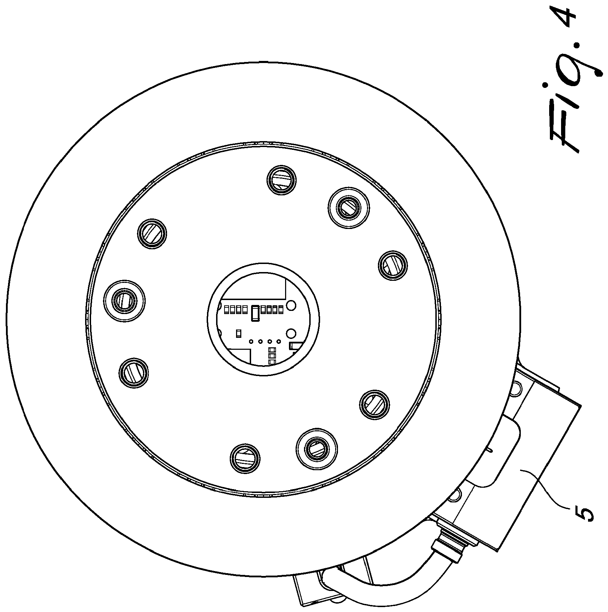

With reference to Figures 3-6, a modular joint, according to the present invention, that can be used in the reconfigurable modular robot, comprises a central shaft S, drive means 1 mounted around the central shaft S, a motion input link flange means A and a motion output link flange means B.

The motion input link flange means A is connected to the drive means 1 so as to be actuated in rotation about the central shaft S and the motion output link flange means B is connected to the motion input link flange means A so as to be actuated in rotation about the central shaft S. The motion output link flange means B is provided with a driving output connection interface F configured to fittingly engage any of the uniform interfaces of any of the blocks of the robot and plug thereinto for transfer of mechanical forces and torque, electrical power, and communications.

The drive means can be provided as a rotary drive comprising, in a non-exclusive embodiment, an electric torque motor 1 and a gearbox 4.

The central shaft S comprises a wire hole suitable to allow accommodation and passage of powering wires and feed connections that enable flow of electric current, data and pneumatic or hydraulic fluids.

The torque motor 1 can be suitably selected among torque motors available on the market.

In a different embodiment, the drive means 1 is a rotary drive means comprising a AC, DC or BLDC motor that can be of the type available on the market. A peripheral shell of the joint, where powering wires and feed connection are arranged, not shown in the Figures since it can be easily conceived and made by the skilled person, is provided in this embodiment.

The modular joint may further comprise dynamic brake means 6 arranged for braking rotary motion of the input and output link flange means A and B.

Sensing devices for sensing position and speed of the motion output and input link flange means A and B can also be provided at suitable positions.

In one embodiment, the modular joint is provided with a digital encoder scale 5 mounted on the motion output link flange means B and a corresponding reading head mounted at the motion input link flange means A.

Since the encoder scale 5 is mounted directly on the output flange means B of the joint, and the reading head is mounted practically on the input flange means A on the joint body, it is possible to measure in a simple and exact manner, the angle that the joint applies in output to the corresponding link, already considering the torsion and bending of its internal components.

The value of the rotation that every joint J1-J6 introduces in the kinematic chain can be precisely measured by the digital encoder 5 at the output flange means B. Since the encoder 5 is used as motor feedback position, the drive 3 will automatically correct the rotation angle of the motor 1, eliminating the backlash of the gearbox 4, as well as the torsion of the joint shaft S.

An integrated driver device 3 enables sharing of commands and control signals among a plurality of said joints and a computer control means PC, via a communication interface.

Two types of modular joints can be provided for being selectively mounted in the reconfigurable modular robot so as to meet different physical-mechanical requirements, such as different torque and dynamic requirements.

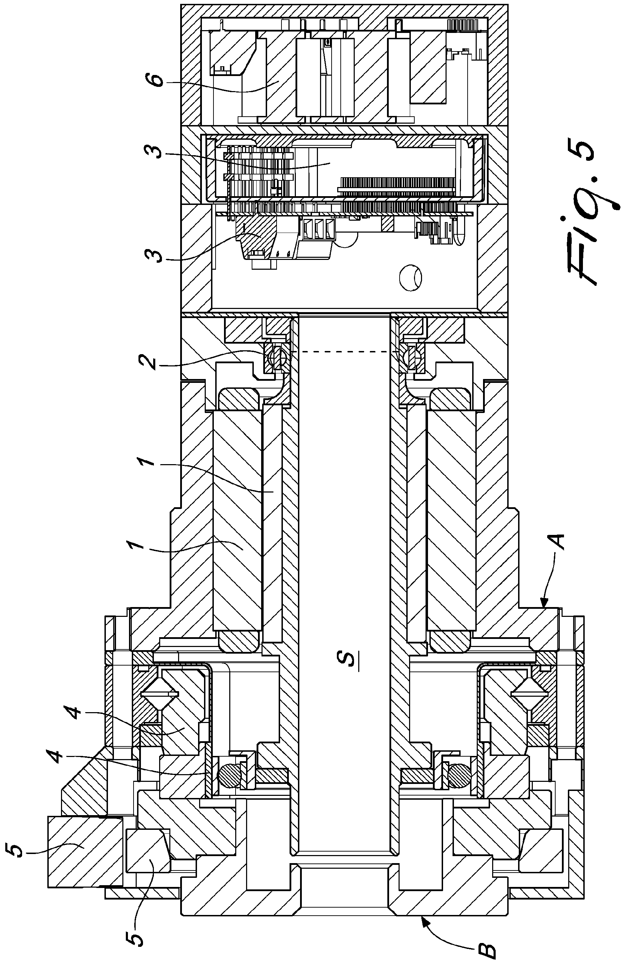

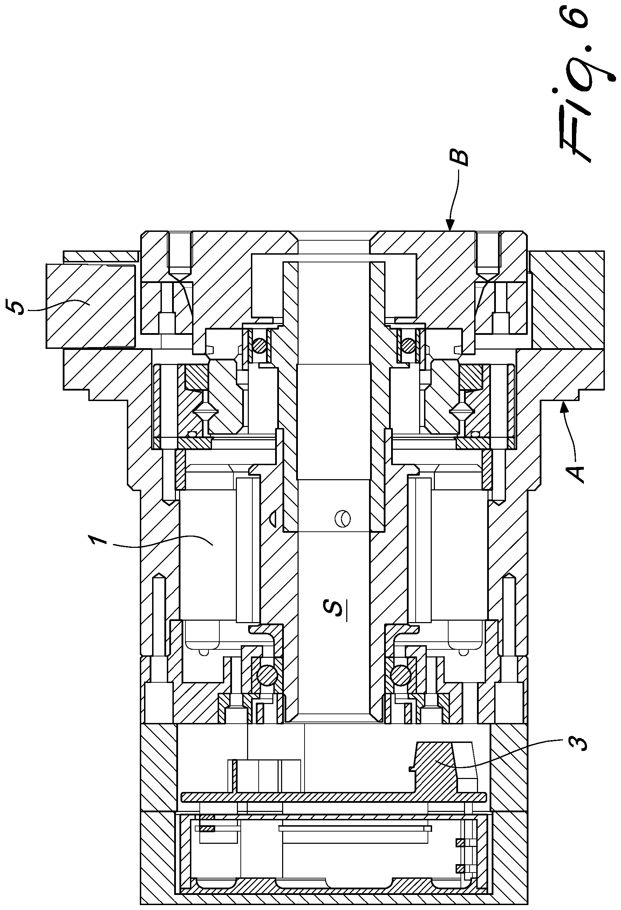

With reference to Figures 5 and 6 the joints shown therein have the same basic features as disclosed above.

A main difference consists in the fact that the joint of Figure 5 has a stronger structure with a more powerful and bigger motor suitable to output higher torques. It can be mounted in an initial base section of the kinematic chain.

The joint of Figure 6 instead, mountable in an end section of the kinematic chain where higher dynamic performances and lower torques are requested, is of a lighter construction and smaller, lighter and less powerful.

The dynamic brake can miss in the latter type of joint since it is not necessary in this chain end positions. In case of change of configuration it could however be easily implemented.

A reconfigurable modular robot, in a preferable but not exclusive embodiment according to the invention, comprises a plurality of blocks including each at least one modular joint, such as those indicated by J1-J6 in the Figures, of a type as disclosed above, and at least one modular link member, such as those indicated by L1-L6 in the Figures.

Each such block has at least one uniform interface F that is configured to fittingly engage a driving output connection interface F of a modular joint J1-J6 that is plugged in the uniform interface F for transfer of mechanical forces and torque, electrical power, and communications.

At least one uniform interface F of a block constituted by the driving output connection interface F of a modular joint J1-J6 is mounted in the block.

Thus the connection interface F of the modular joints J1-J6 for the reconfiguration of the modular robot is also constituted by a uniform interface F of the type of that of the block, or provides itself the uniform interface F of the block.

Such uniform interfaces, an important feature for modular joints, are practically provided as standard interfaces for easy and efficient plugging into, or unplugging from uniform interfaces F of the block for operation in any of the different positions required by the configuration/reconfiguration of the modular robot.

The connection interface of a joint may be, for example, a simple flange which can be plugged into and blocked to interfaces of link members or other joints with screws or other known mechanical locking means, both manually and automatically. Anyway, transfer of mechanical forces and torque, electrical power, and communications among the joints of the kinematic chain and to respectively from the control means, is always assured.

An end-effector EE of any type requested by the specific application for which the robot is configured or reconfigured is provided connected to a last one, such as L6, of the modular link members L1-L6 and is driven by way of a last one, such as J6, of the modular joints J1-J6.

With reference to Figures 1, 2 and 7a-7b, the kinematic chain configuration may be that of a robot arm that comprises a first base section, subjected to increased torques, and a second arm section subjected to lower torques.

The first base section may comprise modular joints J1-J3 of the first type mentioned above (Figure 5) as having a stronger structure and more powerful drive means.

The second section may instead comprise modular joints J4-J6 of the second type described above (Figure 6) that have a lighter structure which is suitable to enable the arm to achieve the requested dynamic performance, such as high translation/ rotation speeds with little inertial forces.

The modular joints of the first and second types may be mounted alone or combined in any desired configuration in the two above-mentioned sections, according to the requirements.

The design of both types of such joints, besides the differences in dimensions and torque features, is conceived in a way that they can be mounted, by virtue of their identical uniform connection interfaces, in a number of different alternatives across the robotic arm, as outlined in Figures 1, 2 and 7b.

Each of the modular joints of the invention is provided, as set forth above, individually and so as to provide an independent unity, with a control system including sensing devices for sensing position and speed of the drive means, such as rotary drive means 1, digital encoder 5 and integrated driver means 3 enabling sharing of command and control signals among a plurality of said joints and said computer control via communication interface.

A computer control PC for controlling at least one, possibly more or all of the modular joints, is also provided for control of the parameters and operation of the robot.

The control system of each of the joints communicates with the control system of the others and with the computer control so as to enable automatic discovery and interpretation of any new modular joint when plugged into the modular robot by way of the integrated driver means 3, sharing features of the new modular joint with a module of the computer control means which generates a new set of parameters for the new modular robot configuration.

For the modular robot, for example when configured as a robot arm, the digital encoder 5 of each modular joint J1-J6, mounted as disclosed above, on the motion output link flange means B and with a reading head provided mounted at the motion input link flange means A of the modular joint enables measuring of an angle that each modular joint J1-J6 applies to the robotic arm.

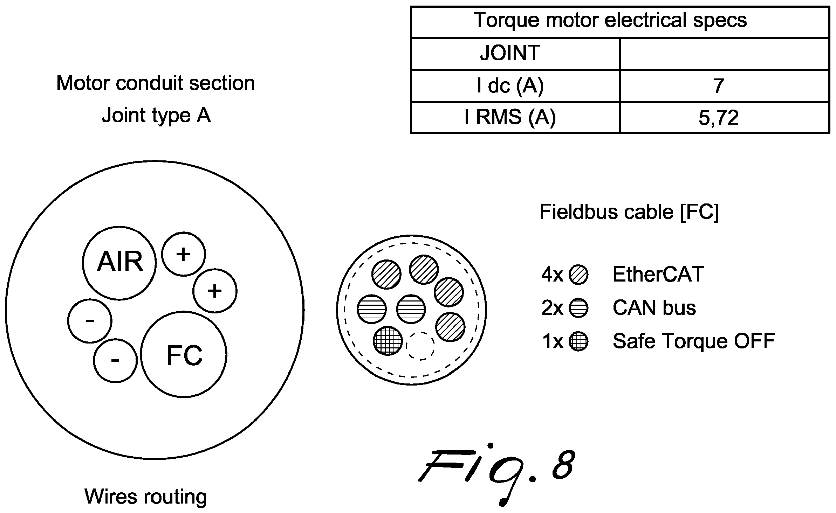

The modular joint, according to the invention, has been conceived to enable the inner passage of cables, as illustrated for example in Figure 8. However, the number of wires and feed connections going, for example, through the central hole of the shaft S of the joint varies with the position of the joint across the kinematic chain.

This requires any joint to ensure the passage of the largest necessary amount of cables in order to cover the possibility the joint is mounted close to the base of the robot.

In a reconfigurable modular robot made by the inventor, this passage was tuned on a 6 DoF (degrees of freedom) robotic arm.

The wires and feed connections enable the flow of current, data and pneumatic fluid.

Other, different robot configurations can be put into practice with a different number of wire and feed connections, according to the requirements.

In order to match the infrastructural requirements for various robot configurations, the control system solution is conceived by adopting a modular approach. It results that both hardware and software subsystems address the requirements of plug&play capability, distributed control system, fieldbus fast communication, standard-protocol-based communication with external devices (e.g. robotic cell supervisor) and easy reconfiguration of modules.

The plug&play capability of hardware modules allows to physically reconfigure the robot (e.g. after the replacement of one or more joints and/or links) without the need of the operator's intervention to achieve hardware and software adjustments of the system in order to fit the new configuration.

As a result, from the hardware point of view, the motor drivers are integrated inside the joints.

All the commands and control signals are shared among joints and to the central processing unit via a standard communication interface. This so called decentralized structure in the control system architecture is useful for the re-configurability, as it allows to consider each sub-system (i.e. robot joint) as an independent-entity, ready to connect and interact with the entire control system (from the field up to the motion controller).

The joint integrated drives are all connected to the robot controller. A closed-loop adaptation is persistently ensured. From the top down, the robot controller communicates updated set of motor parameters to the joints (e.g. Position, Velocity, Gain, Acceleration and Velocity Feed Forward). From the bottom up, every drive performs high-precision positioning tasks of the motor joint through the real-time communication (for example via EtherCAT interface) with the robot controller.

The communication between the robot controller and the distributed motor drives can be based, for example, on EtherCAT: an Ethernet based field bus system standardized in IEC 61158.

In a practical implementation, but others are of course possible as the skilled person will understand from the present disclosure, the reconfigurable modular robot according to the invention, relies upon a PC-based automation technology that is adapted for the industrial field being very reliable and very flexible at the same time, in all the operational conditions.

The control system of each modular joint enables, according to the invention, by way of the computer control means PC, the definition of sets of Key Performance Indicators (KPIs), locally, at modular joint level and, globally, at robot control level.

The Key Performance Indicators feature operation categories of: (1) Normal if a normal range of operation is defined; (2) Warning if operation proceeds normally, but outside the normal average expected limits and where a warning flag is set; (3) Degraded where an operation is still proceeding, but at a reduced pace in order to avoid further degradation; and (4) Failure if degraded levels have been exceeded and the operation is stopped.

This is a so-called feature of intelligence of the joint according to the invention, since it allows to assess over time the necessary working requirements against its and the robot's capabilities.

It represents an important feature of the robot according to the invention enabling its reconfigurability. It includes the ability of the joint to track and interpret its status and, based on it, invoke the robot CNC for a high level adaptation strategy or autonomously undertaking a low level strategy to modify the motion parameters.

This approach requires the definition of a set of Key Performance Indicators (KPIs) at joint level (local) and at robot control level (global) as set forth in the above paragraph.

Among the many advantages of the modular joint of the present invention over the known modular robot joints are mentioned following:
Unprecedented position accuracy (up to 5 microns), a feature that is partially resulting from the mechanical construction and partially from the ability to discover and anticipate possible anomalies before they generate major failures. Such accuracy target was checked to be achievable by a modular joint robot configuration developing a mechatronic design composed, for example, by a torque motor, gearbox and sensors/encoder integrated in a compact mechanical shell which globally ensure a minimum backlash, plus the embed drives hosting a control logic designed to detect and correct the position and velocity errors.

Higher versatility, related to the ability of the joint to be placed and mounted in different positions of the robotic arm. From the technical perspective, such features are resulting from the mechanical standard interface of the joint module which ensures its integration on multiple positions plus the ability of the servo drive and electronics to detect a joint which is placed in a new position by loading its identification code and the specific joint parameters which can be then utilized by the CNC to adapt the new robot kinematics.

And not least, self-resilience, that is the joint ability to persistently monitor through a set of KPIs over the time the joint performance and adapt the joints motion parameters to the new operating requirements. This is a major advantage in pursuing the robot predictive, extraordinary and ordinary maintenance and it is ensured by the monitoring of the joint performance indicators (KPIs) at the joint local level and a consequent recovery strategy when such indicators suggest a misbehaviour.

The foregoing description of the preferred embodiments of the invention has been presented to illustrate the principles of the invention and not to limit the invention to the particular embodiment/embodiments illustrated. It is intended that the scope of the invention be defined by all of the embodiments encompassed within the scope of the following claims.

## Claims

1. A modular joint for a reconfigurable robot configured with a plurality of blocks comprising at least one said modular joint (J1-J6) and at least one link member (L1-L6), each block having uniform interfaces that allow transfer of mechanical forces and torque, electrical power, and communications therethrough, the modular joint comprising:
- a central shaft (S),
wherein said central shaft (S) comprises a wire hole suitable to allow accommodation and passage of wires and feed connections that enable flow of electric current, data and pneumatic or hydraulic fluids;
- drive means (1,4) mounted on said central shaft (S);
- a motion input link flange means (A);
- a motion output link flange means (B);
**characterised in that**
said motion input link flange means (A) being connected to said drive means (1,4) so as to be actuated in rotation about said central shaft (S),
said motion output link flange means (B) being connected, by way of a gearbox (4), to said motion input link flange means (A) so as to be actuated in rotation about said central shaft (S),
wherein said motion output link flange means (B) is provided with a driving output connection interface (F) configured to fittingly engage any of the uniform interfaces of any of the blocks of the robot and plug thereinto for transfer of mechanical forces and torque, electrical power, and communications;
wherein the modular joint is individually provided, so as to constitute an independent unity, with a control system including sensing devices for sensing position and speed of the drive means, such as rotary drive means (1) and digital encoder (5),
wherein the control system is further provided with an integrated driver means (3) that is configured to:
enable sharing of command and control signals among a plurality of modular joints and a computer control means (PC) via a communication interface, and
enable communication with the control system of the other modular joint and with the computer control means (PC) so as to enable automatic discovery and interpretation of any new modular joint when plugged into the modular robot, sharing features of a new modular joint with a module of the computer control means which generates a new set of parameters for the new modular robot configuration, and
wherein the control system is configured to enable, by way of the computer control means PC, the definition of sets of Key Performance Indicators (KPIs), locally, at the modular joint level and, globally, at a robot control level.

2. The modular joint according to claim 1, wherein said drive means is a rotary drive means comprising a torque motor (1) and the gearbox (4).

3. The modular joint according to claim 1, wherein said drive means is a rotary drive means comprising a AC, DC or DC brushless motor.

4. The modular joint according to any of the preceding claims comprising dynamic brake means (6) arranged for braking rotary motion of said input and output link flange means (A, B).

5. The modular joint according to any of the preceding claims including sensing means for sensing position and speed of the motion output and input link flange means (A, B).

6. The modular joint according to any of the preceding claims comprising a digital encoder scale (5) mounted on the motion output link flange means (B) and a reading head mounted at the motion input link flange means (A).

7. A reconfigurable modular robot, comprising:
- a plurality of blocks comprising each at least one modular joint (J1-J6) according to claim 1 and at least one link member (L1-L6),
- each said block having at least one uniform interface (F) that is configured to fittingly engage a driving output connection interface (F) of a said modular joint (J1-J6) plugged thereinto for transfer of mechanical forces and torque, electrical power, and communications;
- an end-effector (EE) connected to one of said link members (L6) driven by one of said modular joints (J6); and
- computer control means (PC) for controlling said at least one modular joint (J1-J6).

8. The modular robot of claim 7 being a robotic arm configured by interconnection of said plurality of blocks in a chain configuration.

9. The modular robot according to claim 7 or 8 wherein at least one said uniform interface of a said block is constituted by the driving output connection interface (F) of a said modular joint (J1-J6) mounted in the block.

10. The modular robot according to any of the claims 7-9, wherein each said modular joint (J1-J6) is provided with a control system including sensing means for sensing position and speed of the drive means, digital encoder (5) and integrated driver means (3) enabling sharing of command and control signals among a plurality of said joints and said computer control means (PC) via communication interface.

11. The modular robot according to claim 10, wherein said control system of each said modular joint (J1-J6) is configured to enable automatic discovery and interpretation of any new modular joint when plugged into the modular robot by way of the integrated driver means (3) sharing features of the new modular joint (J1-J6) with the computer control means which generate a new set of parameters for the new modular robot configuration.

12. The modular robot according to claim 10 or 11 configured as a robot arm, wherein said digital encoder scale (5) of each said modular joint (J1-J6) is mounted on a motion output link flange means (B) and a reading head is provided that is mounted at a motion input link flange means (A) of the modular joint so as to enable measuring of an angle that the modular joint (J1-J6) applies to the robot arm.

13. The modular robot according to any of claims 10-12, wherein the control system of each said modular joint is configured to enable, by way of said computer control means (PC), definition of sets of Key Performance Indicators (KPIs), locally, at modular joint level and, globally, at robot control level, the Key Performance Indicators featuring operation categories of (1) Normal if a normal range of operation is defined; (2) Warning if operation proceeds normally, but outside the normal average expected limits and where a warning flag is set; (3) Degraded where an operation is still proceeding, but at a reduced pace in order to avoid further degradation; and (4) Failure if degraded levels have been exceeded and the operation is stopped.

14. The modular robot according to any of the claims 8-13, wherein the chain configuration comprises a first base section, subjected to motor torques, and a second arm section, the second arm section being subjected to lower torques when compared with the motor torques acting on said first base section, the first base section comprising modular joints (J1-J3) having a structure suitable to motor torques of drive means and the second section comprising modular joints (J4-J6) having a lighter structure, when compared with the structure of the modular joints of the first base section, which is suitable to enable the arm to achieve any requested dynamic performance.

## Patentansprüche

1. Eine modulare Verbindung für einen rekonfigurierbaren Roboter, konfiguriert mit einer Vielzahl von Blöcken, die mindestens die modulare Verbindung (J1-J6) und mindestens ein Verbindungsglied (L1-L6) umfassen, wobei jeder Block einheitliche Schnittstellen hat, die die Übertragung von mechanischen Kräften und Drehmoment, elektrischem Strom und Kommunikation dadurch ermöglichen, wobei die modulare Verbindung Folgendes umfasst:
- einen zentralen Schaft (S),
wobei der zentrale Schaft (S) ein Drahtloch umfasst, das geeignet ist, die Aufnahme und das Hindurchführen von Drähten und Zuleitungsverbindungen zu gestatten, die den Durchfluss von elektrischem Strom, Daten und pneumatischen oder hydraulischen Fluiden ermöglichen;
- Antriebsmittel (1, 4), die an dem zentralen Schaft (S) montiert sind;
- ein Bewegungseingangsverbindungs-Flanschmittel (A);
- ein Bewegungsausgangsverbindungs-Flanschmittel (B); **dadurch gekennzeichnet, dass**
das Bewegungseingangsverbindungs-Flanschmittel (A) so mit den Antriebsmitteln (1, 4) verbunden ist, dass es um den zentralen Schaft (S) drehend angetrieben werden kann;
das Bewegungsausgangsverbindungs-Flanschmittel (B) über ein Getriebe (4) so mit dem Bewegungseingangsverbindungs-Flanschmittel (A) verbunden ist, dass es um den zentralen Schaft (S) drehend angetrieben werden kann;
wobei das Bewegungsausgangsverbindungs-Flanschmittel (B) mit einer Antriebsausgangsverbindungs-Schnittstelle (F) ausgestattet ist, die konfiguriert ist, um mit einer der einheitlichen Schnittstellen eines der Blöcke des Roboters zusammenzupassen und zur Übertragung von mechanischen Kräften und Drehmoment, elektrischem Strom und Kommunikation dort hineingesteckt zu werden;
wobei die modulare Verbindung individuell, um eine unabhängige Einheit zu bilden, mit einem Steuerungssystem ausgestattet ist, das Erfassungsvorrichtungen für die Erfassung der Position und Geschwindigkeit der Antriebsmittel, wie zum Beispiel Dreh-Antriebsmittel (1) und Digitalcodierer (5), einschließt;
wobei das Steuerungssystem weiter mit einem integrierten Antriebsmittel (3) ausgestattet ist, das konfiguriert ist, um den Austausch von Befehls- und Steuersignalen zwischen einer Vielzahl modularer Verbindungen und einem Computer-Steuerungsmittel (PC) über eine Kommunikationsschnittstelle zu ermöglichen, und
die Kommunikation mit dem Steuerungssystem der anderen modularen Verbindung und mit dem Computer-Steuerungsmittel (PC) zu ermöglichen, um die automatische Erkennung und Interpretation einer neuen modularen Verbindung zu ermöglichen, wenn sie in den modularen Roboter eingesteckt wird, wobei Merkmale einer neuen modularen Verbindung mit einem Modul des Computer-Steuerungsmittels ausgetauscht werden, das einen neuen Parametersatz für die neue modulare Roboterkonfiguration erzeugt;
und
wobei das Steuerungssystem konfiguriert ist, um über das Computer-Steuerungsmittel (PC) die Definition von Sätzen von Leistungskennzahlen (Key Performance Indicators, KPIs) lokal auf modularer Verbindungsebene und global auf Robotersteuerungsebene zu ermöglichen.

2. Die modulare Verbindung gemäß Anspruch 1, wobei das Antriebsmittel ein Dreh-Antriebsmittel ist, das einen Drehmomentmotor (1) und das Getriebe (4) umfasst.

3. Die modulare Verbindung gemäß Anspruch 1, wobei das Antriebsmittel ein Dreh-Antriebsmittel ist, das einen WS-, GS-oder bürstenlosen GS-Motor umfasst.

4. Die modulare Verbindung gemäß einem beliebigen der obigen Ansprüche, die dynamische Bremsmittel (6) umfasst, angeordnet, um die Drehbewegung der Eingangs- und Ausgangsverbindungs-Flanschmittel (A, B) abzubremsen.

5. Die modulare Verbindung gemäß einem beliebigen der obigen Ansprüche, die Erfassungsmittel zum Erfassen der Position und Geschwindigkeit der Bewegungsausgangs- und -eingangsverbindungs-Flanschmittel (A, B) einschließt.

6. Die modulare Verbindung gemäß einem beliebigen der obigen Ansprüche, die eine digitale Codierskala (5) umfasst, montiert am Bewegungsausgangsverbindungs-Flanschmittel (B), und einen Lesekopf, montiert am Bewegungseingangsverbindungs-Flanschmittel (A) .

7. Ein rekonfigurierbarer modularer Roboter, der Folgendes umfasst:
- eine Vielzahl von Blöcken, die jeweils mindestens eine modulare Verbindung (J1-J6) gemäß Anspruch 1 und mindestens ein Verbindungsglied (L1-L6) umfassen,
- wobei jeder Block mindestens eine einheitliche Schnittstelle (F) hat, die konfiguriert ist, um mit einer Antriebsausgangsverbindungs-Schnittstelle (F) einer modularen Verbindung (J1-J6) zusammenzupassen, die dort zur Übertragung von mechanischen Kräften und Drehmoment, elektrischem Strom und Kommunikation hineingesteckt ist;
- einen Endeffektor (EE), verbunden mit einem der Verbindungsglieder (L6), angetrieben von einer der modularen Verbindungen (J6), und
- Computer-Steuerungsmittel (PC) zum Steuern der mindestens einen modularen Verbindung (J1-J6).

8. Der modulare Roboter gemäß Anspruch 7, der ein Roboterarm ist, welcher durch Verbindung der Vielzahl von Blöcken miteinander in einer Kettenkonfiguration konfiguriert ist.

9. Der modulare Roboter gemäß Anspruch 7 oder 8, wobei die mindestens eine einheitliche Schnittstelle des Blocks aus der Antriebsausgangsverbindungs-Schnittstelle (F) der modularen Verbindung (J1-J6) besteht, die im Block montiert ist.

10. Der modulare Roboter gemäß einem beliebigen der Ansprüche 7-9, wobei jede modulare Verbindung (J1-J6) mit einem Steuerungssystem ausgestattet ist, das Erfassungsmittel zum Erfassen der Position und Geschwindigkeit des Antriebsmittels einschließt, wobei Digitalcodierer (5) und integrierte Antriebsmittel (3) den Austausch von Befehls- und Steuersignalen unter einer Vielzahl der Verbindungen und den Computer-Steuerungsmitteln (PC) über die Kommunikationsschnittstelle ermöglichen.

11. Der modulare Roboter gemäß Anspruch 10, wobei das Steuerungssystem jeder modularen Verbindung (J1-J6) konfiguriert ist, um eine automatische Erkennung und Interpretation jeder neuen modularen Verbindung zu ermöglichen, wenn sie in den modularen Roboter eingesteckt wird, wobei über das integrierte Antriebsmittel (3) Merkmale der neuen modularen Verbindung (J1-J6) mit den Computer-Steuerungsmitteln ausgetauscht werden, die einen neuen Parametersatz für die neue modulare Roboterkonfiguration erzeugen.

12. Der modulare Roboter gemäß Anspruch 10 oder 11, konfiguriert als Roboterarm, wobei die digitale Codiererskala (5) jeder modularen Verbindung (J1-J6) an einem Bewegungsausgangsverbindungs-Flanschmittel (B) montiert ist und ein Lesekopf bereitgestellt ist, der an einem Bewegungseingangsverbindungs-Flanschmittel (A) der modularen Verbindung montiert ist, um die Messung eines Winkels zu ermöglichen, den die modulare Verbindung (J1-J6) an den Roboterarm anlegt.

13. Der modulare Roboter gemäß einem beliebigen der Ansprüche 10-12, wobei das Steuerungssystem jeder modularen Verbindung konfiguriert ist, um über das Computer-Steuerungsmittel (PC) die Definition von Sätzen von Leistungskennzahlen (Key Performance Indicators, KPIs) lokal auf modularer Verbindungsebene und global auf Robotersteuerungsebene zu ermöglichen, wobei die Leistungskennzahlen folgende Arbeitskategorien aufweisen: (1) normal, wenn ein normaler Betriebsbereich definiert ist; (2) Warnung, wenn der Betrieb normal, aber außerhalb der normalen durchschnittlichen zu erwartenden Grenzen abläuft, wobei ein Warnungsindikator gesetzt wird; (3) Verschlechterung, wenn ein Betrieb noch abläuft, aber mit reduzierter Geschwindigkeit, um eine weitere Verschlechterung zu vermeiden; und (4) Fehler, wenn Verschlechterungs-Schwellen überschritten wurden und der Betrieb angehalten wird.

14. Der modulare Roboter gemäß einem beliebigen der Ansprüche 8-13, wobei die Kettenkonfiguration einen ersten Basisabschnitt, der Motoren-Drehmomenten unterliegt, und einen zweiten Armabschnitt umfasst, wobei der zweite Armabschnitt niedrigeren Drehmomenten unterliegt, verglichen mit den Motoren-Drehmomenten, die auf den ersten Basisabschnitt wirken, wobei der erste Basisabschnitt modulare Verbindungen (J1-J3) mit einer Struktur umfasst, die für Motoren-Drehmomente von Antriebsmitteln geeignet ist, und der zweite Abschnitt modulare Verbindungen (J4-J6) umfasst, die eine leichtere Struktur als die modularen Verbindungen des ersten Basisabschnitts haben, wodurch es dem Arm ermöglicht wird, jede gewünschte dynamische Leistung zu erzielen.

## Revendications

1. Articulation modulaire pour un robot reconfigurable configuré avec une pluralité de blocs comprenant au moins une dite articulation modulaire (J1-J6) et au moins un élément de liaison (L1-L6), chaque bloc comportant des interfaces uniformes qui permettent le transfert de forces mécaniques et de couple, d'énergie électrique et de communications à travers elles, l'articulation modulaire comprenant :
- un arbre central (S),
dans laquelle ledit arbre central (S) comprend un trou à fils approprié pour permettre la mise en place et le passage de fils et de raccords d'alimentation qui permettent la circulation d'un courant électrique, de données et de fluides pneumatiques ou hydrauliques ;
- un moyen d'entraînement (1,4) monté sur ledit arbre central (S) ;
- un moyen formant bride de liaison d'entrée de mouvement (A) ;
- un moyen formant bride de liaison de sortie de mouvement
(B) ; **caractérisée en ce que** :
ledit moyen formant bride de liaison d'entrée de mouvement (A) est relié audit moyen d'entraînement (1,4) afin d'être actionné en rotation autour dudit arbre central (S),
ledit moyen formant bride de liaison de sortie de mouvement (B) étant relié, à l'aide d'une boîte à engrenages (4), audit moyen formant bride de liaison d'entrée de mouvement (A) afin d'être actionné en rotation autour dudit arbre central (S),
dans laquelle ledit moyen formant bride de liaison de sortie de mouvement (B) est pourvu d'une interface de connexion de sortie d'entraînement (F) configurée pour se mettre en prise de manière ajustée avec l'une quelconque des interfaces uniformes de l'un quelconque des blocs du robot et pour s'y brancher pour le transfert de forces mécaniques et de couple, d'énergie électrique et de communications ;
dans laquelle l'articulation modulaire est pourvue individuellement, afin de constituer une unité indépendante, d'un système de commande comportant des dispositifs de mesure pour mesurer la position et la vitesse du moyen d'entraînement, tels qu'un moyen d'entraînement rotatif (1) et un codeur numérique (5),
dans laquelle le système de commande est en outre pourvu d'un moyen formant pilote intégré (3) qui est configuré pour :
permettre le partage de signaux de commande et de gestion entre une pluralité d'articulations modulaires et un moyen de commande informatique (PC) via une interface de communication, et
permettre la communication avec le système de commande de l'autre articulation modulaire et avec le moyen de commande informatique (PC) afin de permettre la découverte et l'interprétation automatiques de toute nouvelle articulation modulaire au moment de son branchement dans le robot modulaire, en partageant les caractéristiques d'une nouvelle articulation modulaire avec un module du moyen de commande informatique qui génère un nouvel ensemble de paramètres pour la nouvelle configuration de robot modulaire, et
dans laquelle le système de commande est configuré pour permettre, à l'aide du moyen de commande informatique (PC), la définition d'ensembles d'indicateurs clés de performance (KPI), localement, au niveau de l'articulation modulaire et, globalement, au niveau d'une commande de robot.

2. Articulation modulaire selon la revendication 1, dans laquelle ledit moyen d'entraînement est un moyen d'entraînement rotatif comprenant un moteur couple (1) et la boîte à engrenages (4).

3. Articulation modulaire selon la revendication 1, dans laquelle ledit moyen d'entraînement est un moyen d'entraînement rotatif comprenant un moteur à courant alternatif, un moteur à courant continu ou un moteur à courant continu sans balai.

4. Articulation modulaire selon l'une quelconque des revendications précédentes, comprenant un moyen formant frein dynamique (6) agencé pour freiner le mouvement de rotation desdits moyens formant brides de liaison d'entrée et de sortie (A, B).

5. Articulation modulaire selon l'une quelconque des revendications précédentes, comportant un moyen de mesure pour mesurer la position et la vitesse des moyens formant brides de liaison de sortie et d'entrée de mouvement (A, B).

6. Articulation modulaire selon l'une quelconque des revendications précédentes, comprenant une échelle de codeur numérique (5) montée sur le moyen formant bride de liaison de sortie de mouvement (B) et une tête de lecture montée sur le moyen formant bride de liaison d'entrée de mouvement (A).

7. Robot modulaire reconfigurable comprenant :
- une pluralité de blocs comprenant chacun au moins une articulation modulaire (JI-J6) selon la revendication 1 et au moins un élément de liaison (L1-L6),
- chacun desdits blocs comportant au moins une interface uniforme (F) qui est configurée pour se mettre en prise de manière ajustée avec une interface de connexion de sortie d'entraînement (F) d'une dite articulation modulaire (J1-J6) branchée sur celle-ci pour le transfert de forces mécaniques et de couple, d'énergie électrique et de communications ;
- un organe terminal effecteur (EE) connecté à l'un desdits éléments de liaison (L6) entraîné par l'une desdites articulations modulaires (J6) ; et
- un moyen de commande informatique (PC) pour commander ladite au moins une articulation modulaire (J1-J6).

8. Robot modulaire selon la revendication 7, qui est un bras robotisé configuré par l'interconnexion de ladite pluralité de blocs dans une configuration en chaîne.

9. Robot modulaire selon la revendication 7 ou 8, dans lequel au moins une dite interface uniforme d'un dit bloc est constituée par l'interface de connexion de sortie d'entraînement (F) d'une dite articulation modulaire (J1-J6) montée dans le bloc.

10. Robot modulaire selon l'une quelconque des revendications 7 à 9, dans lequel chacune desdites articulations modulaires (J1-J6) est pourvue d'un système de commande comportant un moyen de mesure pour mesurer la position et la vitesse du moyen d'entraînement, un codeur numérique (5) et un moyen formant pilote intégré (3) permettant le partage de signaux de commande et de gestion entre une pluralité desdites articulations et ledit moyen de commande informatique (PC) via une interface de communication.

11. Robot modulaire selon la revendication 10, dans lequel ledit système de commande de chacune desdites articulations modulaires (J1-J6) est configuré pour permettre la découverte et l'interprétation automatiques de toute nouvelle articulation modulaire au moment de son branchement dans le robot modulaire à l'aide du moyen formant pilote intégré (3) en partageant les caractéristiques de la nouvelle articulation modulaire (J1-J6) avec le moyen de commande informatique qui génère un nouvel ensemble de paramètres pour la nouvelle configuration de robot modulaire.

12. Robot modulaire selon la revendication 10 ou 11 configuré comme bras de robot, dans lequel ladite échelle de codeur numérique (5) de chacune desdites articulations modulaires (J1-J6) est montée sur un moyen formant bride de liaison de sortie de mouvement (B) et une tête de lecture est prévue, qui est montée sur un moyen formant bride de liaison d'entrée de mouvement (A) de l'articulation modulaire afin de permettre la mesure d'un angle que l'articulation modulaire (JI-J6) applique au bras de robot.

13. Robot modulaire selon l'une quelconque des revendications 10 à 12, dans lequel le système de commande de chacune desdites articulations modulaires est configuré pour permettre, à l'aide dudit moyen de commande informatique (PC), la définition d'ensembles d'indicateurs clés de performance (KPI), localement, au niveau de l'articulation modulaire et, globalement, au niveau d'une commande de robot, les indicateurs clés de performance présentant des catégories de fonctionnement (1) Normal si une plage de fonctionnement normal est définie ; (2) Alerte si le fonctionnement se déroule normalement, mais en dehors des limites moyennes normales attendues et si un drapeau d'alerte est activé ; (3) Dégradé si une opération se déroule toujours, mais à allure réduite afin d'éviter une dégradation supplémentaire ; et (4) Panne si des niveaux dégradés ont été dépassés et que le fonctionnement s'arrête.

14. Robot modulaire selon l'une quelconque des revendications 8 à 13, dans lequel la configuration en chaîne comprend une première section de base, soumise à des couples moteurs, et une deuxième section de bras, la deuxième section de bras étant soumise à des couples plus faibles que les couples moteurs agissant sur ladite première section de base, la première section de base comprenant des articulations modulaires (J1-J3) ayant une structure adaptée aux couples moteurs du moyen d'entraînement et la deuxième section comprenant des articulations modulaires (J4-J6) ayant une structure plus légère que la structure des articulations modulaires de la première section de base, qui est appropriée pour permettre au bras de réaliser n'importe quelle opération dynamique requise.
